# FASCICULE DE BREVET EUROPEEN

(11) **EP 1 575 365 B1**
(45) Date de publication et mention de la délivrance du brevet: **18.03.2009**
(21) Numéro de dépôt: 03786036.8
(22) Date de dépôt: 20.11.2003
(51) Int. Cl.: A01N 65/00

(54) **MATIERE ACTIVE INSECTIDE, PROCEDE DE PREPARATION ET UTILISATIONS**
INSEKTIZIDER WIRKSTOFF, HERSTELLUNGSVERFAHREN UND VERWENDUNG
ACTIVE INSECTICIDE MATERIAL, PREPARATION METHOD AND USES THEREOF

(30) Priorité: 23.12.2002 FR 0216544
(43) Date de publication de la demande: 21.09.2005
(73) Titulaire: UNIVERSITE JOSEPH FOURIER (GRENOBLE 1), F-38041 Grenoble Cédex (FR)
(72) Inventeur: MEYRAN, Jean-Claude, F-38300 Montbonnot St-Martin (FR); MARIGO, Gérard, F-82340 DUNES (FR); TILQUIN, Mathieu, F- 38610 GIERES (FR)
(74) Mandataire: Hinterberg, Katherine
(86) Numéro de dépôt international: PCT/FR2003/003437
(87) Numéro de publication internationale: WO 2004/064525

(56) Documents cités:
- M.TILQUIN ET AL.: "hot extraction and characterization of a ligninlike fraction involved in larvicidal effects of decomposed leaf litter against mosquito" JOURNAL OF CHEMICAL ECOLOGY, vol. 28, no. 8, août 2002 (2002-08), pages 1497-1510, XP009009821 cité dans la demande
- J.-P.DAVID ET AL.: "larvicidal effect of a cell-wall fraction isolated from alder decaying leaves" JOURNAL OF CHEMICAL ECOLOGY, vol. 26, no. 4, avril 2000 (2000-04), pages 901-913, XP009009822 cité dans la demande
- M.TILQUIN ET AL.: "dietary toxicity of decomposed arborescent leaf litter against larval mosquito: involvement of a lignin-polypeptidic complex" J.AGRIC.FOOD.CHEM., vol. 50, 17 septembre 2002 (2002-09-17), pages 6378-6382, XP002239273 cité dans la demande

## Description

La présente invention concerne un procédé de préparation d'une matière active, et plus particulièrement d'une matière active insecticide, à partir de litières arborescentes décomposées, les matières actives ainsi obtenues et leur utilisation dans la lutte contre les insectes nuisibles.

L'un des objectifs majeurs des recherches menées en démoustication réside dans la mise au point de nouveaux larvicides compatibles avec l'environnement et la santé, et présentant une efficacité opérationnelle satisfaisante. Les stratégies insecticides conventionnelles ont subi une évolution (Casida JE, Quistad GB (1998) Golden age of insecticide research: past, present, or future ? An. Rev. Entomol. 43, 1-16) où les composés chimiques de synthèse (e.g., organo-phosphorés) sont peu à peu remplacés par des bactério-insecticides (e .g., *Bacillus thuringiensis* (Feitelson JS, Payne J, Kim L (1992) Bacillus thuringiensis: insects and beyond Bio-Technology 10, 271-275.); *Bacillus sphaericus* (Baumann P, Clark MA, Baumann L, Broadwell AH (1991) Bacillus sphaericus as a mosquito pathogen: properties of the organism and its toxins Microbiol. Rev. 55, 425-436). L'apparition de phénomènes de résistance au sein des populations de moustiques traitées par des insecticides chimiques (Georghiou GP (1994) Principles of insecticide resistance management Phytoprotection 75, 51-59) ou des bactério-insecticides (Tabashnik BE (1994) Evolution of resistance to Bacillus thuringiensis An. Rev. Entomol. 39, 47-49) a conduit au développement de nouvelles stratégies basées sur l'utilisation de molécules naturelles. Ainsi, par exemple, les polyphénols, issus du métabolisme secondaire des végétaux, présentent une forte toxicité vis-à-vis d'insectes phytophages (Barbehenn R, Martin MM (1994) Tannin sensitivity in larvae of Malacosoma disstria (Lepidoptera): roles of the peritrophic envelope and midgut oxidation. J. Chem. Ecol. 20, 1985-2001.) et de certaines espèces de moustiques détritivores (Mercer DR, Anderson JR (1994) Tannins in treehole habitats and their effects on Aedes sierrensis (Diptera: Culicidae) production and parasitism by Lambornella clarki (Ciliophora: Tetrahymenidae). J. Medic. Entomol. 31, 159-167).

Les travaux de David *et al*. (David JP, Rey D, Marigo G, Meyran JC (2000) Larvicidal effect of a cell-wall fraction isolated from alder decaying leaves J. Chem. Ecol. 26, 901-913) ont permis de mettre en évidence, dans certains gîtes à moustiques de la région Rhône-Alpes, une forte toxicité des litières arborescentes décomposées vis à vis des larves de moustiques qui les consomment. Cette toxicité, mesurable par des bioessais standardisés, a pu être reliée à la présence, dans la matière végétale décomposée, d'un complexe constitué notamment de lignines associées à des formes azotées apparentées à des protéines (Tilquin M et al. (2002) Hot extraction and characterization of a lignin fraction involved in the larvicidal effects of decomposed leaf litter against mosquito J. Chem. Ecol. 28, 1497-1510 ; Tilquin M, Meyran JC, Marigo G (2002) Dietary toxicity of decomposed arborescent leaf litter against larval mosquito: involvement of a lignin-polypeptidic complex J. Agric. Food Chem. 50: 6378-6382).

Cependant, l'apparition *in natura* de la toxicité dans ces litières brutes semblant sous la dépendance de paramètres environnementaux complexes, difficilement contrôlables, la formation de ces complexes toxiques demeure aléatoire. Ainsi, des complexes toxiques ne peuvent être isolés que de litière brute présentant au préalable des propriétés toxiques et dans lesquelles des complexes toxiques se sont donc naturellement formés au cours de la décomposition de la litière. Or, les paramètres permettant l'apparition de ces complexes toxiques insecticides dans les litières brutes en décomposition ne sont pas connus. L'isolement de ces complexes toxiques ou insecticides reste donc difficilement reproductible.

Pour remédier à ces inconvénients la présente invention propose un procédé de préparation de matière active insecticide et/ou larvicide, à partir de litière brute, quelque soit son degré ou son age de décomposition. Ce procédé selon l'invention est simple et rapide, permettant, à partir de litières arborescentes brutes, d'isoler une nouvelle matière active utilisable contre de nombreuses espèces d'insectes et plus particulièrement contre les espèces culicidiennes anthropophiles, invasives et vectrices potentielles de maladies (e.g., Aedes, *Culex*).

Avantageusement, dans les procédés selon l'invention, il n'est pas nécessaire d'utiliser comme produit de départ une litière en décomposition ayant des propriétés toxiques ou insecticides. Les procédés de préparation de matière active à partir de litière brute selon l'invention permettent à la fois de maîtriser la formation *in vitro* des matières actives insecticides ou toxiques et de maîtriser leur isolement de façon reproductible. L'intérêt majeur du procédé est donc de recréer, *in vitro*, des conditions favorables à l'association des différents éléments constitutifs de la matière active.

Le procédé, qui peut être appliqué aussi bien à des litières toxiques qu'à des litières non encore toxiques, collectées à partir d'espèces arborescentes banales, très représentées dans les plaines alluviales des régions tempérées (e.g., aulne, peuplier, chêne, ...), se révèle d'un emploi facile et général.

### Description de l'invention

Ainsi un premier objet de la présente invention consiste donc à proposer un nouveau procédé de préparation d'une matière active toxique vis à vis des insectes, à partir de litière arborescente brute.

La présente invention a pour objet un procédé de préparation d'une matière active comprenant les étapes suivantes :
- on dispose de litière arborescente brute,
- on extrait la fraction soluble de ladite litière avec un tampon aqueux à température ambiante,
- puis on chauffe ladite fraction soluble ainsi obtenue à une température comprise entre 40°C et 80°C,
- on précipite, à température ambiante la matière active insoluble, à partir de la fraction soluble.

Le procédé selon la présente invention présente encore l'un quelconque des modes d'exécution suivants, lesquels peuvent être le cas échéant combinés entre eux :
- on broie la litière arborescente brute, puis on extrait la fraction soluble à partir de la litière broyée.
- la litière arborescente brute est séchée avant d'être broyée.
- on précipite la matière active insoluble se formant progressivement, pendant au moins 24 heures.
- on isole la matière active insoluble précipitée, par exemple par centrifugation.
- la litière arborescente est décomposée.
- la litière arborescente appartient à l'horizon Olv.
- la fraction soluble est extraite dans un tampon phosphate 25 Mm.
- on chauffe la fraction soluble à 70°C.
- après chauffage de la fraction soluble, on élimine les impruretés insolubles, apparues au cours dudit chauffage, par centrifugation de ladite fraction soluble.
- on précipite la matière active insoluble pendant 72 heures.

On entend par « matière active » le constituant de la fraction d'une préparation ou d'une composition auquel est attribué tout ou partie de son efficacité.

Dans la présente invention, la matière active extraite de litière brute a des propriétés toxiques vis-à-vis des insectes, et plus particulièrement des propriétés insecticides et plus particulièrement larvicides.

Toute litière brute arborescente à différents stades de décomposition et de différentes origines peut être utilisée dans les procédés selon la présente invention.

De préférence, la litière arborescente brute est collectée dans des forêts décidues ripariales et alluviales à saules, aulnes, frênes, chênes et ormes de type G11, G12 selon la nomenclature EUNIS (European Nature Information System, European Environment Agency, 2002).

Préférentiellement, la litière arborescente brute est prélevée dans l'horizon O du sol de forêt et plus préférentiellement dans l'horizon Olv du sol de forêt.

Par « horizon » on entend une couche de sol plus ou moins parallèle à la surface, et qui se distingue des couches voisines, qui lui sont généralement liées, par ses caractères morphologiques, physiques, chimiques ou biologiques.

Par « horizon O » on entend l'horizon organique superficiel, résultant de l'accumulation et de la dégradation en surface, surtout aérobique, des matières organiques de forêts.

De préférence, la litière brute est prélevée dans l'horizon Olv correspondant à la litière « vieillie » faite de feuilles plus ou moins transformées, brunies, blanchies, ramollies et/ou en paquets collés, mais ne présentant aucune matière organique fine (Green, R N, Trowbridge, R L, Klinka, K (1993) Towards a taxonomic classification of humus forms, Forest Sci. Monogr., 29, 1-49 ; Jabiol B, Brêthes A, Ponge J-F, Toutain F, Brun J-J (1995) L'humus sous toutes ses formes, ENGREF edn. Nancy).

Après prélèvement la litière brute peut être broyée selon des techniques habituelles. Typiquement, la litière est broyée et tamisée jusqu'à l'obtention de particules de 0.5 mm de diamètre. De manière avantageuse, la litière collectée est séchée à température ambiante avant le broyage.

La fraction soluble dans l'eau de la litière broyée est ensuite extraite en phase aqueuse, à température ambiante.

On entend par « fraction soluble » les éléments solides de la litière broyée pouvant se dissoudre dans l'eau ou dans une solution aqueuse en formant un mélange homogène.

De préférence, on extrait la fraction soluble dans un tampon phosphate de molarité égale ou inférieure à 25mM et de pH compris entre 5.5 et 8.5. De préférence, le tampon d'extraction est un tampon phosphate 25mM de pH 7.5 et préférentiellement, le tampon d'extraction est un tampon phosphate monopotassique-disodique 25 mM de pH 7.5. D'autres tampons phosphates pourront être utilisés à la même molarité et au même pH (tampon phosphate monopotassique-soude, tampon phosphate disodique-acide citrique par exemple).

Dans le procédé selon l'invention, la fraction soluble est ensuite traitée à la chaleur. Le chauffage est effectué à une température comprise entre 40°C et 80°C, de préférence à une température comprise entre 50°C et 75°C. Avantageusement, on chauffe la fraction soluble à 70°C pendant 10 minutes.

Cette étape de chauffage entraîne l'apparition d'impuretés insolubles. Ces impuretés insolubles sont préférentiellement éliminées selon des techniques connues de l'homme du métier. Après le chauffage, les impuretés insolubles sont par exemple éliminées par centrifugation de la fraction soluble et élimination du culot solide.

Consécutivement au traitement par la chaleur, lors du refroidissement, la matière active insoluble toxique se forme progressivement dans la fraction soluble et précipite.

On entend par « précipitation » tout phénomène selon lequel des constituants précédemment en solution forment un solide insoluble qui s'isole de son solvant et se dépose au fond.

De préférence, on laisse la précipitation s'effectuer à température ambiante pendant au moins 24h. Avantageusement, on laisse précipiter la matière active insoluble pendant 72h. La température de précipitation étant préférentiellement de 25°C.

De manière avantageuse, l'étape de précipitation est effectuée à un pH compris entre 6.5 et 7.5.

Après l'étape de précipitation, les matières actives insolubles sont isolées selon des techniques habituelles. Dans un mode de réalisation particulier de l'invention, les matières actives insolubles sont isolées par centrifugation de la fraction. A l'issue de cette centrifugation, seul le culot solide de matière active insoluble est conservé. La centrifugation est par exemple effectuée à 5000t/min pendant 30 minutes. Dans un autre mode de réalisation, les matières actives sont isolées par centrifugations fractionnées.

Un autre objet de la présente invention est de proposer une nouvelle matière active toxique vis-à-vis des insectes, susceptible d'être obtenue par un procédé selon l'invention. Dans la présente invention, la matière active extraite de litière brute a des propriétés toxiques, et/ou insecticides plus particulièrement larvicides.

On entend par « insecticide » une substance toxique pour les insectes soit avant leur maturité (larvicide), soit au stade adulte.

Plus particulièrement, la matière active et les compositions de la présente invention sont toxiques pour les insectes anthropophiles et donc pour les insectes qui piquent exclusivement ou préférentiellement l'homme. En particulier, la matière active et les compositions de la présente invention sont toxiques pour les larves de moustiques et plus particulièrement pour les larves de moustiques anthropophiles.

Un autre objet de la présente invention est une composition insecticide comprenant une matière active selon l'invention. De préférence, la composition selon l'invention a des propriétés larvicides.

Dans un mode de réalisation particulier de l'invention, les compositions selon l'invention comprennent également un support solide ou liquide et/ou un ou plusieurs agents tensio-actifs.

Les compositions selon l'invention se présentent donc sous des formes assez diverses, solides ou liquides.

Par le terme "support", on désigne une matière organique ou minérale, naturelle ou synthétique, qui entre dans la formulation de la composition insecticide pour faciliter son application, améliorer sa stabilité ou sa biodisponibilité. Ce support est généralement inerte. Le support peut être solide ou liquide. Des mélanges de tels supports peuvent être également utilisés.

Par le terme « tensio-actif » on entend un composé qui introdu it dans un liquide en abaisse la tension superficielle, ce qui a pour effet d'en augmenter les propriétés mouillantes. L'agent tensioactif peut être un agent émulsionnant, dispersant ou mouillant de type ionique ou non ionique ou un mélange de tels agents tensioactifs.

La présente invention a également pour objet, l'utilisation d'une matière active et/ou d'une composition selon l'invention pour la lutte à titre préventif ou curatif contre les insectes. Plus particulièrement, les matières actives et les compositions selon l'invention sont utilisées comme larvicides.

### Description des figures

**Figure 1** **:** Effet de la molarité du tampon d'extraction (tampon phosphate, pH 7.5) sur la toxicité des formes insolubles constituées *in vitro.* ES : erreur standard calculée à partir de trois répétitions.
**Figure 2** **:** Effet de la température de traitement de l'extrait sur la toxicité des formes insolubles constituées *in vitro.* ES : erreur standard calculée à partir de trois répétitions.
**Figure 3****:** Recherche du moment optimal pour l'application du traitement par la chaleur. Les extraits protéiques sont chauffés à 70 °C soit immédiatement (t₀), soit 5, 12, 24 ou 48 heures après leur obtention. Les formes insolubles sont collectées après 72 heures de précipitation. ES : erreur standard calculée à partir de trois répétitions.
**Figure 4** **:** Cinétique d'apparition de la toxicité sous forme insoluble après traitement par la chaleur. Les formes insolubles sont collectées par centrifugation au cours de la phase de précipitation à 20 °C, soit immédiatement après chauffage à 70 °C (t0), soit après 12, 24, 48, 60 ou 72 heures ; leur toxicité est mesurée par bioessai (■). Parallèlement, la quantité de protéines restant dans les extraits (▲) est dosée après centrifugation. ES : erreur standard calculée à partir de trois répétitions.
**Figure 5** **:** Profils chromatographiques des polypeptides (a) extraits dans le tampon phosphate, (b) recueillis dans le précipité après 72 heures.
**Figure 6** **:** Effet du pH lors de la phase de précipitation de la toxicité.
**Figure 7** **:** Protocole standard retenu pour isoler le complexe toxique *in vitro*. Les symboles + et - indiquent la présence (> 80 %) ou l'absence (< 10 %) de toxicité mesurée au cours des différentes étapes de purifications.

### Exemples

### Exemple 1 : Collecte du matériel végétal

Les litières arborescentes utilisées proviennent de gîtes à moustiques de la région Rhône-Alpes, initialement décrits par Maire A (Maire A (1971) Indice des opérations de démoustication sur les biotopes larvaires à Aedes dans la région Rhône-Alpes. Université Joseph Fourier) Les prélèvements ont été effectués dans l'horizon Olv correspondant à la litière vieillie (Jabiol B, Brêthes A, Ponge J-F, Toutain F, Brun J-J (1995) L'humus sous toutes ses formes, ENGREF edn. Nancy), sur 5 plots standardisés (50 x 50 cm), dans deux sites connus pour générer des litières toxiques ou non selon l'année (Tilquin M, Meyran JC, Marigo G (2002) Dietary toxicity of decomposed arborescent leaf litter against larval mosquito: involvement of a lignin-polypeptidic complex J. Agric. Food Chem., 50:6378-6382). Après séchage à température ambiante, les litières sont broyées, tamisées (diamètre des particules : 0.5 mm) et stockées à -25 °C.

### Exemple 2 : Contrôles de toxicité

La toxicité des échantillons est testée à l'aide de bioessais standards sur larves d'Aedes *aegypti* élevées en conditions contrôlées au laboratoire (Rey D, Cuany A, Pautou MP, Meyran JC (1999) Differential sensitivity of mosquito taxa to vegetable tannins J. Chem. Ecol. 25, 537-548). Les bioessais sont conduits à 25 °C, sur des lots homogènes de 20 larves de stade IV mises en contact avec 10 ml de suspension d'échantillon à tester. La mortalité larvaire est mesurée après 2 heures de contact et exprimée en %.

### Exemple 3 : Extraction des protéines du complexe toxique

Les protéines sont extraites dans la glace, à partir de 50 mg de litière brute finement broyée, dans 5 ml de tampon phosphate mono potassique /disodique 25 mM (pH 7.5), pendant 30 minutes sous agitation. L'extrait est séparé du résidu solide par centrifugation (5 000 rpm pendant 5 minutes) puis filtration sur papier filtre (Whatman n°4) et stocké dans la glace. L'extraction est répétée à trois reprises en renouvelant le milieu d'extraction : 15 ml d'extrait sont ainsi collectés. Le résidu solide, correspondant à la fraction lignine, est séché et conservé à -25 °C.

### Exemple 4: Identification et dosage des protéines du complexe toxique

Après dissociation en présence de dodecylsulfate de sodium (SDS) 0,2 % dans du tampon phosphate (1 heure dans l'eau bouillante), les polypeptides extraits sont identifiés par chromatographie sur couche mince de silice greffée en phase inverse (silice RP 18 F 254) avec du tampon phosphate 25 mM (pH 8.5) comme solvant de migration. Après migration, les plaques sont révélées par la ninhydrine à 0.1 % dans l'éthanol (révélateur des acides aminés). Les protéines extraites sont dosées par colorimétrie en utilisant la ninhydrine selon le protocole de Sameijama K (Sameijama K (1971) Reagent for detecting and assaying peptides, amino acids, amines and amino sugars, Anal. Biochem. 42, 222).

### Exemple 5 : Protocole d'isolement du principe larvicide à partir de litières non toxiques

Si le principe larvicide a pu être isolé de litières brutes toxiques après extraction par l'eau chaude (1 heure à 50 °C) puis par précipitation progressive à température ambiante (Tilquin M et al. (2002) Hot extraction and characterization of a lignin fraction involved in the larvicidal effects of decomposed leaf litter against mosquito J. Chem. Eco/. 28, 1497-1510), on a obtenu un principe non larvicide en appliquant ce protocole à des litières brutes non toxiques du même âge (résultat non présenté). Ces résultats peuvent s'expliquer par un comportement différent des éléments constitutifs du complexe toxique. Contrairement à ce qui se passe dans la litière toxique, ces éléments demeurent compartimentés dans la litière non toxique, ce qui empêcherait leur association en vue de la toxicité.

La fraction protéique est extraite à froid, en présence de tampon phosphate 25 mM (pH 7,5), le résidu végétal déprotéinisé contenant les lignines. Ces deux éléments sont ensuite associés grâce à un traitement d'1 heure à 50 °C (étape 1), permettant d'extraire les lignines du résidu déprotéinisé et de les mettre directement en contact avec la fraction protéique (**Tableau 1** : Essai). Le principe est ensuite isolé par précipitation (étape 2). L'extrait protéique seul (Contrôle 1) et le matériel déprotéinisé en suspension dans du tampon phosphate (Contrôle 2) subissent les mêmes traitements.

**Tableau 1 : Conditions d'isolement du principe actif à partir de litières non toxiques**

| | Essai | Contrôle 1 | Contrôle 2 |
|---|---|---|---|
| | Matériel végétal déprotéinisé*^{a}* + extrait protéique*^{b}* | Extrait protéique seul*^{b}* | Matériel végétal déprotéinisé*^{a}* + tampon phosphate |
| Protocole | Chauffage | 1 heure | à 50°C |
| | Précipitation | 72 heures | à 25°C |
| Toxicité des formes insolubles*^{c}* | + | + | - |

| | | | |
|---|---|---|---|
| **a** Le matériel déprotéinisé correspond au résidu végétal après extraction des protéines par le tampon phosphate. **b** L'extrait protéique contient les protéines végétales solubilisées dans le tampon phosphate. **c** Les formes insolubles sont collectées par centrifugation de l'extrait protéique et testées par bioessai. La toxicité observée après 2 h de contact avec les larves est représentée par + lorsqu'elle est supérieure à 80 % et par - lorsqu'elle est inférieure à 10 %. | | | |

La comparaison de ces résultats montre que, pour engendrer des formes toxiques, il n'est pas indispensable de ré-associer les protéines à des lignines de type conventionnelles (Essai) puisque l'extrait protéique global manifeste, à lui seul, le même niveau de toxicité après traitement (Contrôle 1). Cette observation suggère qu'au delà des protéines, l'extraction par le tampon phosphate solubilise des éléments (peut être dérivés des lignines) pouvant se substituer aux lignines conventionnelles dans la formation du complexe toxique. Le contrôle 2 souligne le rôle important du tampon phosphate dans la phase d'extraction et l'obtention finale du principe actif.

La première étape importante dans la mise en oeuvre du protocole d'isolement consiste donc en l'extraction, par le tampon phosphate, de formes potentiellement actives dans la toxicité. En l'absence de traitement par la chaleur ou lorsque l'on supprime la phase de précipitation, aucune toxicité n'apparaît (résultats non présentés). Ces deux traitements complémentaires apparaissent donc incontournables dans la réalisation du protocole. Enfin, aucune toxicité n'a pu être observée dans les phases solubles des essais/contrôles effectués, ce qui confirme la nature insoluble du principe actif isolé.

Il semble que ce soit l'étape de recombinaison des différentes composantes du complexe toxique qui soit limitante dans l'apparition de la toxicité, ces dernières pouvant demeurer compartimentées dans le matériel foliaire non toxique (Tilquin M, Meyran JC, Marigo G (2002) Dietary toxicity of decomposed arborescent leaf litter against larval mosquito: involvement of a lignin-polypeptidic complex J. Agric. Food Chem. 50: 6378-6382). Le procédé mis au point repose donc sur une décompartimentation par extraction des différents éléments impliqués, suivie d'une précipitation favorisant leur association *in vitro*.

Ce procédé comporte trois étapes : (1) l'extraction des différents éléments impliqués dans la toxicité, en présence de tampon, par exemple tampon phosphate 25 mM (pH 7,5) ; (2) l'élimination de substances inhibant l'apparition de la toxicité, après traitement par la chaleur; (3) la reconstitution du principe actif, par précipitation des éléments pré-extraits. La purification des formes toxiques reconstituées, par centrifugations fractionnées, permet d'optimiser le protocole.

### Exemple 6 : Optimisation de l'étape d'extraction

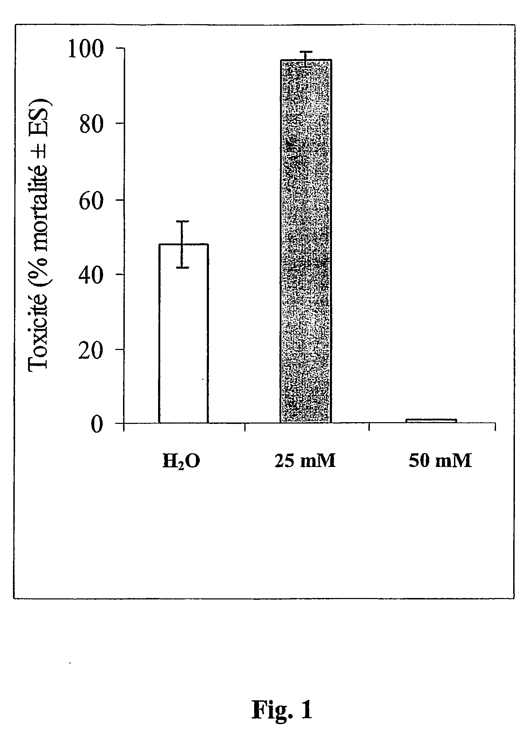

Différents tampons d'extraction ont été testés, montrant une très grande spécificité du tampon phosphate qui apparaît comme l'un des seuls permettant la formation du principe actif *in* ***vitro* (Tableau 2).** Alors que le pH n'influence pas nettement l'étape d'extraction lorsqu'il demeure compris entre 5.5 et 8.5 (résultat non présenté), la molarité du tampon phosphate semble déterminante, avec un optimum très marqué à 25 mM **(****Figure 1****).**

**Tableau 2 : Effet de la nature du tampon d'extraction sur la toxicité des formes constituées in vitro.**

| | Nature du tampon d'extraction*^{a}* | | | | |
|---|---|---|---|---|---|
| | Phosphate | TRIS | MES | HEPES | MOPS |
| Toxicité des formes insolubles*^{b}* | + | - | - | - | - |

| | | | | | |
|---|---|---|---|---|---|
| **a** L'étape d'extraction est réalisée dans 5 tampons différents (pH 7.5), utilisés à 25 mM. **b** Les formes insolubles sont collectées par centrifugation de l'extrait protéique après chauffage et précipitation, puis testées par bioessai. La toxicité observée après 2 h de contact avec les larves est représentée par + lorsqu'elle est supérieure à 80 % et par - lorsqu'elle est inférieure à 10 %. | | | | | |

### Exemple 7 : Optimisation du traitement par la chaleur

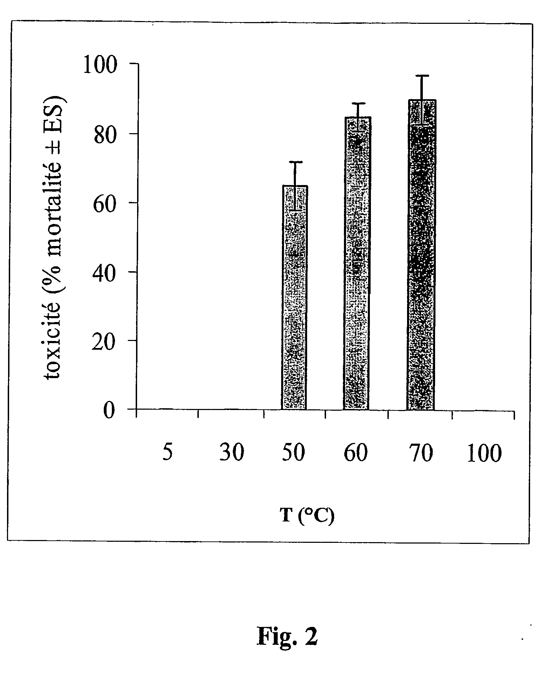

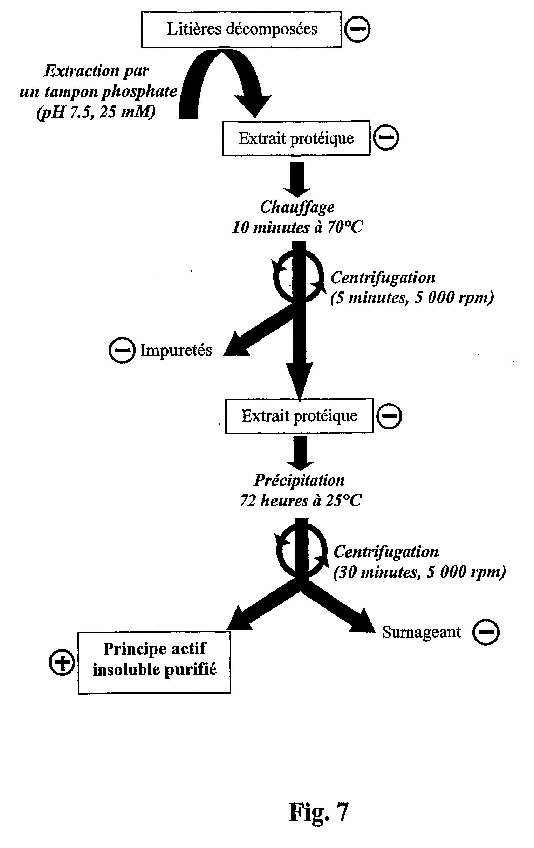

Le traitement par la chaleur est optimal à 70 °C **(****Figure 2****),** 10 minutes à cette température suffisant à engendrer une toxicité maximale (résultat non présenté). Immédiatement après chauffage, il est à noter l'apparition de formes insolubles que l'on peut éliminer sans affecter la toxicité du précipité final **(** **Figure 7****).**

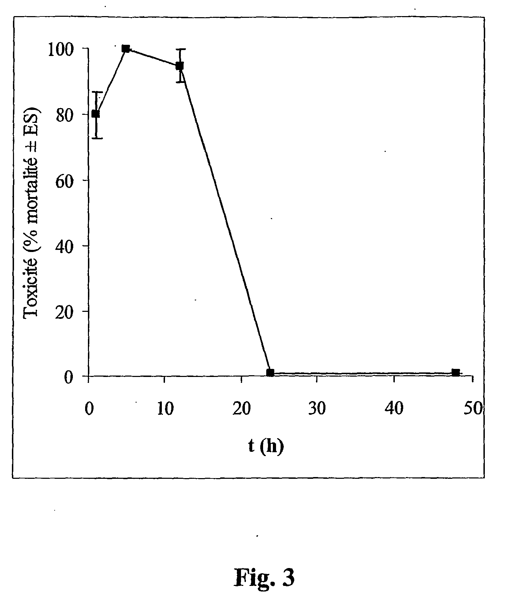

On a recherché à quel moment le traitement par la chaleur devait être appliqué au cours de la phase de précipitation du principe actif. Les résultats de la Figure 3 montrent la nécessité d'effectuer cette étape pendant les 12 premières heures suivant l'extraction. Il semble que le chauffage permette d'éliminer des impuretés qui, lorsqu'elles demeurent en solution durant la phase de précipitation, inhibent la formation du principe toxique.

### Exemple 8 : Optimisation de la phase de précipitation

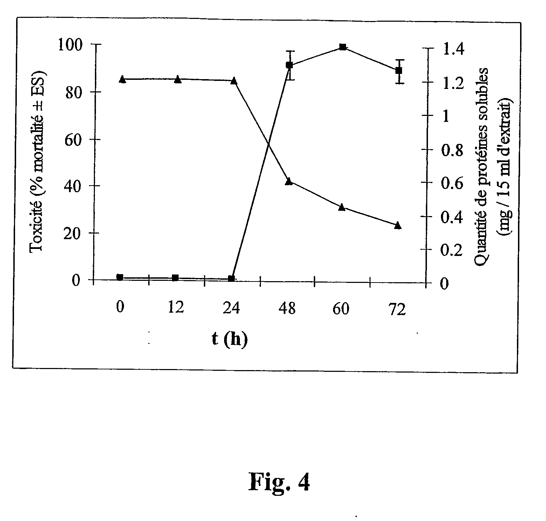

Consécutivement au traitement par la chaleur, la toxicité n'apparaît dans l'extrait qu'après un délai d'au moins 24 heures **(****Figure 4****),** sous la forme de composés qui précipitent progressivement et que l'on isole par centrifugation (30 minutes à 5 000 rpm).

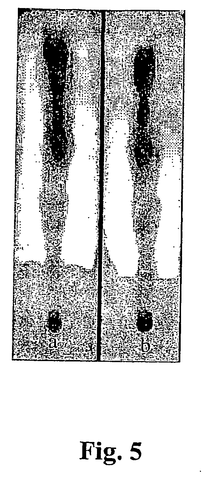

L'apparition de ces formes insolubles toxiques se déroule corrélativement à une précipitation des protéines initialement solubilisées dans l'extrait **(****Figure 4****).** De plus, après précipitation, on retrouve dans le principe actif isolé les 4 polypeptides majeurs extraits, à partir de la litière, par le tampon phosphate **(****Figure 5****).** Ces observations vont dans le sens d'une implication de ces molécules dans la toxicité.

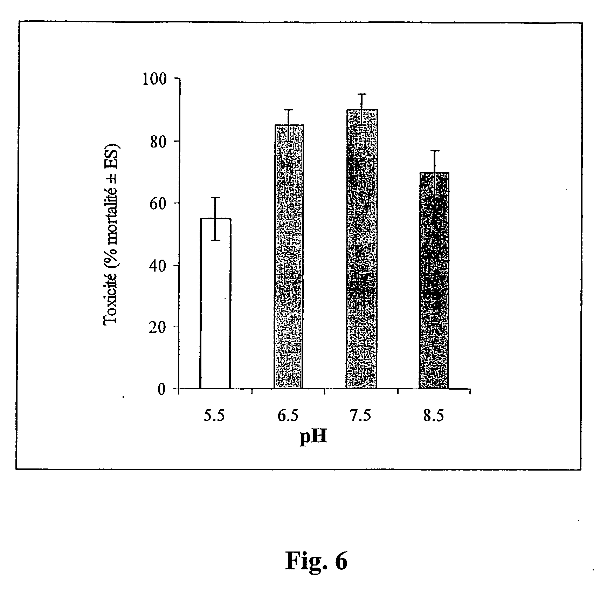

Parmi les autres facteurs modulables dans la phase de précipitation, on peut relever un effet déterminant de la température, optimale aux alentours de 25 °C (aucune toxicité n'est observée lorsque la précipitation est effectuée à 5 ou à 50 °C : **Tableau 3),** et un effet plus modeste du pH, optimal entre 6.5 et 7.5 **(****Figure 6****).** Il est à noter, par ailleurs, qu'aucune précipitation significative de la fraction protéique n'est observée à 5 et 50 °C **(Tableau 3).**

**Tableau 3 : Effet de la température au cours de la phase de précipitation.**

| | Température de précipitation*^{a}* | | |
|---|---|---|---|
| | 5°C | 25°C | 50°C |
| Toxicité des formes insolubles*^{b}* | - | + | - |
| Quantité de protéines solubles*^{c}* (mg / 15 ml d'extrait) | 2.2 | 0.5 | 2.1 |

| | | | |
|---|---|---|---|
| *^{a}* Après traitement par la chaleur, les extraits sont conservés pendant 72 heures à 5, 25 ou 50 °C. *^{b}* Les formes insolubles sont collectées par centrifugation des extraits protéiques et testées par bioessai. La toxicité observée après 2 h de contact avec les larves est représentée par + lorsqu'elle est supérieure à 80 % et par - lorsqu'elle est inférieure à 10 %. *^{c}* La quantité de protéines solubles dans les extraits est dosée après élimination des protéines insolubles par centrifugation. | | | |

### Exemple 9 : Protocole standard retenu et généralisation du procédé

Le procédé standard utilisé en routine, résumé sur la Figure 7, a pu être appliqué avec succès à des litières prélevées sur un même site à différentes périodes de l'année, ou sur différents sites dans la région Rhône-Alpes. Le procédé est généralisable à des litières arborescentes à différents stades de décomposition et de différentes origines. L'efficacité de la matière active isolée a été vérifiée sur différentes espèces larvaires de moustiques. La matière toxique recueillie selon ce procédé s'est avérée active sur différentes espèces de moustiques, parmi lesquelles de nombreuses espèces d'*Aedes* (*A*. *cataphylla, A. rusticus, A. cantans*), connues pour leur invasivité et leur vulnérance.

## Revendications

1. Procédé de préparation d'une matière active toxique vis-à-vis des insectes, selon lequel :
- On dispose de litière arborescente brute
- On extrait la fraction soluble de ladite litière avec une fraction aqueuse,
- On précipite, à température ambiante, la matière active insoluble, à partir de la fraction soluble,
**Caractérisé en ce qu**'en combinaison, on extrait la fraction soluble avec un tampon phosphate de molarité égale ou inférieure à 25mM et de pH compris entre 5,5 et 8,5 à température ambiante, puis on chauffe la fraction soluble à une température comprise entre 40°C et 80°C dans les 12 premières heures suivant l'extraction.

2. Procédé selon la revendication 1, **caractérisé en ce qu'**on broie la litière arborescente brute, puis on extrait la fraction soluble à partir de la litière broyée.

3. Procédé selon la revendication 2, **caractérisé en ce que** la litière brute est séchée avant d'être broyée.

4. Procédé selon la revendication 1, **caractérisé en ce qu'**on précipite la matière insoluble se formant progressivement, pendant au moins 24 heures.

5. Procédé selon la revendication 1, **caractérisé en ce qu'**on isole la matière active insoluble précipitée.

6. Procédé selon la revendication 1, **caractérisé en ce que** la litière arborescente est décomposée.

7. Procédé selon la revendication 1, **caractérisé en ce que** la litière arborescente appartient à l'horizon Olv.

8. Procédé selon la revendication 1, **caractérisé en ce que** la fraction soluble est extraite dans un tampon phosphate 25mM.

9. Procédé selon la revendication 1, **caractérisé en ce qu'**on chauffe la fraction soluble à 70°C.

10. Procédé selon la revendication 1, **caractérisé en ce qu'**après chauffage de la fraction soluble, on élimine les impuretés insolubles, apparues au cours dudit chauffage, par centrifugation de ladite fraction soluble.

11. Procédé selon la revendication 1, **caractérisé en ce qu'**on précipite la matière active insoluble pendant 72 heures.

12. Matière active toxique vis-à-vis des insectes, susceptible d'être obtenue par un procédé selon l'une quelconque des revendications 1 à 11.

13. Composition insecticide ou larvicide, **caractérisée en ce qu'**elle comprend une matière active selon la revendication 12, avec éventuellement un support solide et/ou un ou plusieurs agents tensioactifs.

14. Utilisation non thérapeutique d'une matière active selon la revendication 12 ou d'une composition selon la revendication 13, pour la lutte à titre préventif ou curatif contre les insectes.

15. Utilisation selon la revendication 14, **caractérisé en ce que** les insectes sont des espèces anthropophiles.

## Claims

1. Method for preparing an active material toxic against insects, according to which:
- crude arborescent leaf litter is provided,
- the soluble fraction of said leaf litter is extracted with an aqueous fraction,
- the insoluble active material is precipitated from the soluble fraction, at ambient temperature,
**characterized in that,** in combination, the soluble fraction is extracted with a phosphate buffer having a molarity of less than or equal to 25 mM and a pH of between 5.5 and 8.5, at ambient temperature, and then the soluble fraction is heated between 40°C and 80°C within the first 12 hours following the extraction.

2. Method according to Claim 1, **characterized in that** the crude arborescent leaf litter is ground, and then the soluble fraction is extracted from the ground leaf litter.

3. Method according to Claim 2, **characterized in that** the crude leaf litter is dried before being ground.

4. Method according to Claim 1, **characterized in that** the insoluble material which gradually forms is precipitated for at least 24 hours.

5. Method according to Claim 1, **characterized in that** the precipitated insoluble active material is isolated.

6. Method according to Claim 1, **characterized in that** the arborescent leaf litter is decomposed.

7. Method according to Claim 1, **characterized in that** the arborescent leaf litter belongs to the Olv horizon.

8. Method according to Claim 1, **characterized in that** the soluble fraction is extracted in a 25 mM phosphate buffer.

9. Method according to Claim 1, **characterized in that** the soluble fraction is heated at 70°C.

10. Method according to Claim 1, **characterized in that,** after heating the soluble fraction, the insoluble impurities, which have appeared during said heating, are removed by centrifugation of said soluble fraction.

11. Method according to Claim 1, **characterized in that** the insoluble active material is precipitated for 72 hours.

12. Active material toxic against insects, which can be obtained by means of a method according to any one of Claims 1 to 11.

13. Insecticidal or larvicidal composition, **characterized in that** it comprises an active material according to Claim 12, with optionally a solid carrier and/or one or more surfactants.

14. Non-therapeutic use of an active material according to Claim 12 or of a composition according to Claim 13, for preventive or curative insect control.

15. Use according to Claim 14, **characterized in that** the insects are anthropophilic species.

## Patentansprüche

1. Verfahren zur Herstellung eines toxischen Wirkstoffs gegen Insekten, bei dem man:
- über rohes Baumstreu verfügt,
- die lösliche Fraktion aus dem Streu mit einer wässrigen Fraktion extrahiert,
- den unlöslichen Wirkstoff aus der löslichen Fraktion bei Umgebungstemperatur ausfällt,
**dadurch gekennzeichnet, dass** man in Kombination die lösliche Fraktion mit einem Phosphatpuffer, der eine Molarität gleich oder kleiner als 25 mM und einen pH zwischen 5,5 und 8,5 aufweist, bei Umgebungstemperatur extrahiert und anschließend die lösliche Fraktion innerhalb der ersten 12 Stunden, die auf die Extraktion folgen, auf eine Temperatur zwischen 40°C und 80°C erhitzt.

2. Verfahren nach Anspruch 1, **dadurch gekennzeichnet, dass** man das rohe Baumstreu zerreibt und dann die lösliche Fraktion aus dem zerriebenen Streu extrahiert.

3. Verfahren nach Anspruch 2, **dadurch gekennzeichnet, dass** das rohe Baumstreu getrocknet wird, bevor es zerrieben wird.

4. Verfahren nach Anspruch 1, **dadurch gekennzeichnet, dass** man die unlösliche Substanz, die sich nach und nach bildet, während mindestens 24 Stunden ausfällt.

5. Verfahren nach Anspruch 1, **dadurch gekennzeichnet, dass** man den ausgefällten unlöslichen Wirkstoff isoliert.

6. Verfahren nach Anspruch 1, **dadurch gekennzeichnet, dass** das Baumstreu zersetzt wird.

7. Verfahren nach Anspruch 1, **dadurch gekennzeichnet, dass** das Baumstreu zum Bodenhorizont OIv gehört.

8. Verfahren nach Anspruch 1, **dadurch gekennzeichnet, dass** die lösliche Fraktion in einem 25 mM Phosphatpuffer extrahiert wird.

9. Verfahren nach Anspruch 1, **dadurch gekennzeichnet, dass** man die lösliche Fraktion auf 70°C erhitzt.

10. Verfahren nach Anspruch 1, **dadurch gekennzeichnet, dass** man nach dem Erhitzen der löslichen Fraktion die unlöslichen Verunreinigungen, die im Verlauf des Erhitzens aufgetreten sind, mittels Zentrifugation der löslichen Fraktion beseitigt.

11. Verfahren nach Anspruch 1, **dadurch gekennzeichnet, dass** man den unlöslichen Wirkstoff während 72 Stunden ausfällt.

12. Toxischer Wirkstoff gegen Insekten, der durch ein Verfahren nach einem der Ansprüche 1 bis 11 erhältlich ist.

13. Insektizide oder larvizide Zusammensetzung, **dadurch gekennzeichnet, dass** sie einen Wirkstoff nach Anspruch 12, gegebenenfalls mit einem festen Träger und/oder einem oder mehreren oberflächenaktiven Mitteln, umfasst.

14. Nicht-therapeutische Verwendung eines Wirkstoffs nach Anspruch 12 oder einer Zusammensetzung nach Anspruch 13 zur vorbeugenden oder heilenden Bekämpfung von Insekten.

15. Verwendung nach Anspruch 14, **dadurch gekennzeichnet, dass** es sich bei den Insekten um anthropophile Spezies handelt.
